# EUROPÄISCHE PATENTSCHRIFT

(11) **EP 2 330 659 B1**
(45) Veröffentlichungstag und Bekanntmachung des Hinweises auf die Patenterteilung: **20.03.2013**
(21) Anmeldenummer: 10010988.3
(22) Anmeldetag: 28.09.2010
(51) Int. Cl.: H01M 2/10, H01M 2/20, H01M 10/50

(54) **Kühlkörper für eine Hochstromzellanordnung**
Cooler for a high voltage cell assembly
Corps de refroidissement pour un agencement de cellules à courant élevé

(30) Priorität: 02.12.2009 DE 102009056607
(43) Veröffentlichungstag der Anmeldung: 08.06.2011
(73) Patentinhaber: Amphenol-Tuchel Electronics GmbH, 74080 Heilbronnn (DE)
(72) Erfinder: Filipon, Sven, 74080 Heilbronn (DE)

(56) Entgegenhaltungen:
- DE-A1-102007 031 674
- DE-A1-102008 010 839
- US-A1- 2005 026 014

## Beschreibung

Die Erfindung betrifft einen Zellverbinderdeckel zum Abführen von Wärme einer Hochstromzellanordnung sowie eine Hochstromzellanordnung, welche mit einem Zellverbinderdeckel versehen ist.

Die Erfindung betrifft daher einen Zellverbinderdeckei gemäß Anspruch 1 sowie einer Hochstromzellanordnung gemäß Anspruch 9.

### Stand der Technik

Es ist bekannt, Kühlkörper an elektrische Leistungsbauteile zu montieren, um eine ausreichende Wärmeabfuhr aus dem Leistungsbauteil zu gewährleisten. Typischerweise bestehen solche Kühlkörper oder Kühlelemente aus einer Fläche, die einen großflächigen Kontakt zum Leistungsbauteil herstellt und quer davon abstehende Finnen, welche die Oberfläche des Kühlkörpers effektiv vergrößern und die Wärmeabfuhr verbessern. Diese Finnen werden in der Regel als Rippen direkt formschlüssig mit dem Kühlkörper gebildet. Häufig wird der Kühlkörper mit dem Leistungsbauteil zusätzlich durch eine Warmeleitpaste oder einer Vergussmasse verbunden.

Weiterhin ist bekannt, dass zentrale Prozesseinheiten (CPU's) thermoelektrische Module, Leistungstransistoren, VGA-Karten und ähnliches mit der Problematik der elektrischen Wärme belastet sind. Weil solche elektronische Bauelemente während ihres Betriebes eine große Wärmemenge erzeugen, ist eine effektive Kühlung von großer Wichtigkeit. Wird ein elektronisches Bauteil über eine bestimmte Temperatur erhitzt, kann ein Fehler in dem Bauteil auftreten oder das elektronische Bauteil kann geschädigt werden.

Ein anderer Nachteil entsteht in Bezug auf den elektrischen Widerstand. Stromtragende Verbindungen und Verbindungselemente, welche Überhitzen, haben eine geringere Stromtragfähigkeit, da sich der Widerstand erhöht. Insofern limitiert die Temperaturerhöhung die Leistung in einer Anordnung.

Insbesondere im Bereich der Batterietechnik und der zunehmenden Versorgung von Fahrzeugen bei Batterieanordnungen und Zellverbindem besteht der Bedarf danach, leistungsstarke Batteriezellen bereitzustellen. Durch die hohe Stromabnahme aus solchen Hochstromzellanordnungen kommt es an den Kontaktstellen und den Anschlüssen der Batteriezellen zu einer Temperaturerhöhung die in irgend einer Form reduziert werden muss.

Neben den besagten Nachteilen kann es zu einer Überhitzung der Batteriezellen kommen und damit auch zu einer Zerstörung der gesamten Hochstromzellanordnung.

In zunehmendem Maße werden Elektroantriebe in Fahrzeugen benötigt, die über eine erhebliche Anzahl von Batteriezellen in Form einer Hochstromzellanordnung verfügen. Solche Hochstromzellanordnungen unterliegen gewissen Sicherheitsvorschriften und müssen Platz sparend im Fahrzeug untergebracht werden können.

Einerseits müssen solche Zellen gegenüber der Umgebung zwar mittels eines Gehäuses, vorzugsweise mittels eines Zellverbinderdeckels, verschlossen sein, andererseits fehlt es aber vielfach an ausreichendem Bauraum, um die entsprechenden Gehäuse für die Hochstromzellanordnungen an bringen zu können.

Es wird daher versucht, vorhandene Baugruppen im Fahrzeug, welche gleichzeitig eine Gehäusefunktion wahrnehmen können, als Gehäuse für die Hochstromzellanordnung zu verwenden.

Alternativ werden flachbauende Zellverbinderdeckel eingesetzt, welche die Hochstromzellanordnung nur unwesentlich vergrößern dürfen. Damit geht einher, dass keine voluminösen Kühlkörper an die Hochstromzellanordnung angebracht werden können. Aus Gründen des Bauraumproblems steht an den Anschlussenden der Batteriezellen, somit an der Ober,- und Unterseite einer Hochstromzellanordnung, nur ein minimaler Bauraum zur Verfügung.

Sofern eine Hochstromzellanordnung ohne einen Zellverbinderdeckel gekühlt werden muss, besteht das Problem darin, dass in jeder Fahrzeuganwendung unterschiedliche räumliche Gegebenheiten vorzufinden sind.

Insofern müsste auch bei einem vorhandenen, verbleibenden Restbauraum jede Hochstromzellanordnung mit einem eigens dafür entwickelten Kühlkörper ausgestattet werden, um entsprechend der Geometrie der Anwendung eine für den Bauraum geeignete Lösung anzubieten.

Hierzu lehr die DE 197 04 549 einen Kühlkörper für elektrische oder elektronische Bauteile, welche eine verformbare Hülle umfasst, die zumindest teilweise mit einem Wärmeträgermedium gefüllt ist.

Dieses Wärmeträgermedium kann eine pastöse, flüssige oder ähnliche Konsistenz aufweisen, um sich entsprechend der notwendigen Geometrie in die gewünschte Form bringen zu lassen. Es handelt sich somit um einen im wesentlichen formbaren Kühlkörper mit einem Wärmeträgermedium, welcher anpassungsfähig an die Bauraumsituation ist.

Für die hochsicherheitsrelevante Fahrzeug,- und Automobiltechnik ist eine solche Verwendung jedoch nicht geeignet, so dass nach alternativen Lösungen gesucht werden muss.

Aufgabe der vorliegenden Erfindung ist es daher, eine Kühlmöglichkeit zu schaffen für Hochstromzellanordnungen, die auch bei mangelndem Bauraum Einsatz finden kann.

Eine weitere Aufgabe der vorliegenden Erfindung ist es, eine prinzipielle Lösung bereitzustellen, die die an den Anschlüssen einer Batteriezelle entstehende Wärme effektiv zu einem anderen Bauteil ableiten kann.

### Offenbarung der Erfindung

Um die zuvor genannten Probleme zu überwinden, besteht somit die Aufgabe der vorliegenden Erfindung darin, einen geeigneten Kühlkörper für Hochstromzellanordnungen bereitzustellen, welche kostengünstig zu fertigen ist und einen effektiven Wirkungsgrad aufweist.

Als Lösung wird daher vorgeschlagen, einen flachbauenden Deckel, im folgenden Zellverbinderdeckel bereitzustellen, der über eine Vielzahl von Durchbrüchen verfügt, in welche in entsprechender Anzahl Kühlkörper eingebracht sind, welche als federnde Kühlkörper am Zellverbinderdeckel angeformt oder befestigt sind.

Mit Vorteil wird der erfindungsgemäße Zellverbinderdeckel als flachbauender Deckel mit einer Deckelober,- und einer Deckelunterseite so ausgebildet, dass in die Durchbrüche im Deckel federnde Kühlkörper angeformt werden oder eingebracht werden.

Mit Vorteil werden die Oberseiten der federnden Kühlkörper bündig mit der Oberseite des Deckels angeordnet und ragen in das Deckelinnere hinein. Hierdurch wird gewährleistet, dass der in der Hochstromzellanordnung zur Verfügung stehende Platz ausgenutzt wird, ohne das Kühlkörper angeordnet werden müssen, die nach Außen aus der Hochstromzellanordnung herausragen.

Mit Vorteil wird dadurch im Zellverbinderdeckel gleichzeitig die Funktion des Kühlens integriert.

Erfindungsgemäß werden die Kühlkörper aus einem elektrisch isolierenden Material gebildet, wie zum Beispiel aus thermisch leitfähigen Kunststoff oder einer Keramik oder einer anderen thermisch leitfähigen Materialauswahl bereitgestellt.

Im Gegensatz zum Stand der Technik, bei der die Kühlkörper häufig aus Aluminium oder anderen metallischen Werstoffen geformt werden, lässt sich bei der Kühlung einer Hochstromzellanordnung ein metallisches Material nicht einsetzen.

Es sind daher nicht metallische Kühlkörper vorzusehen, die mit Vorteil einseitig, alternativ zweiseitig, federnd am Zellverbinderdeckel entweder befestigt oder formschlüssig angeformt werden. Durch die Federeigenschaften des Kühlkörpers wird gewährleistet, dass beim Verbinden des Zellverbinderdeckels mit der Hochstromzellanordnung die Kühlkörper federbelastet mit ihrer Anlagefläche an den Anschlüssen der Batterlezellen anliegen. Hierdurch wird eine optimale Wärmeübertragung gewährleistet, da die mit Federkraft beaufschlagten Kühlkörper flächig mit einer definierten Pressung an den Batteriezellen beziehungsweise an den Wärmequellen zur Anlage kommen.

Alternativ können die Anschlüsse der Batteriezellen auch mittels eines Kühlkörperadapters miteinander verbunden werden, der ebenfalls aus elektrisch isolierenden Material gebildet sein muss. Der Kühlkörperadapter verfügt über Auflageflächen, welche mit den Wärmequellen, vorzugsweise mit den Anschlüssen der Batteriezellen, verbunden werden.

An einer Anlagefläche, mit Vorteil einer Anlagefläche an der Oberseite des Kühlkörperadapters, kann entweder ein Zellverbinderdeckel der zuvor genannten Art oder ein metallischer Zellverbinderdeckel angeordnet werden, der gleichzeitig eine Schirmwirkung aufweist.

Alternativ kann mittels des Kühlkörperadapters eine Hochstromzellanordnung mit Batterlezellen so in einen vorgegebenen Bauraum an eine metallische Kühlfläche angebaut werden, dass lediglich zwischen die metallische Kühlfläche und die Wärmequellen der Batteriezellen der Kühlkörperadapter montiert werden muss,

Die Wärme kann dann Ober den elektrisch nicht leitfähigen, aus thermisch leitfähigem Material gebildeten Kühlkörperadapter, von den Wärmequellen über dessen Anlageflächen zu den externen Kühlflächen abfließen.

Unter Vermeidung eines Bauraumnachtells kann dadurch eine Hochstromzellanordnung mittels dem Kühlkörperadapter, auf einfache Weise an ein im Fahrzeug vorhandenes Kühlblech angebaut werden und damit auf ein weiteres Bauteil verzichtet werden.

Mit Vorteil kann der zuvor beschriebene Kühlkörperadapter auch in Verbindung mit einem Zellverbinderdeckel so verwendet werden, dass der Kühlkörperadapter mit seiner Anlagefläche zum Abführen der Wärme aus den Wärmequellen an den federnden Kühlkörper des Zellverbinderdeckels angebracht werden. Um eine optimale Verbindung zur thermischen Leitfähigkeit herzustellen, sind die Kühlkörperadapter mit ihrer Anlagefläche so auszubilden, dass bei Montage des Zellverbinderdeckels die dort eingebrachten federnden Kühlkörper durch die Kühlkörperadapter mittels Federkraft beaufschlagt werden.

Dies kann auf einfache Weise dadurch geschehen, dass die Höhe der Kühlkörperadapter Ober den zu Verfügung stehenden Bauraum um eine Wegstrecke S vergrößert ausgebildet Ist, so dass beim Aufsetzen des Zellverbinderdeckels die Kühlkörper federnd um die Wegstrecke S, also um den Federweg S ausgelenkt werden.

Mit Vorteil verfügen die Kühlkörper über eine Kühlkörperunterseite, die ihrer Größe und Beschaffenheit nach geeignet ist zur Kontaktierung mit der Wärmequelle der Hochstromzellanordnung oder der Anlagefläche eines geeigneten Kühlkörperadapters.

Materialauswahl und geometrische Abstimmung der Bauteile hat entsprechend den Bedürfnissen der Anwendung zu erfolgen. Insbesondere sind dabel der zur Verfügung stehende Platz zu berücksichtigen, das Ausmaß der Wärmebildung und damit der entstehenden Wärme, sowie der gewünschten Leistungsfähigkeit der Hochstromzellanordnung.

Weitere Vorteile ergeben sich aus der folgenden Figurenbeschreibung. In den Figuren sind Ausführungsbeispiele der Erfindung dargestellt. Die Zeichnungen, die Beschreibung und die Ansprüche enthalten die Merkmale auch in Kombination.

Der Fachmann wird die entsprechenden Merkmale In zweckmäßiger Weise auch einzeln betrachten und zu sinnvollen weiteren Kombinationen zusammenfassen.

Es zeigen in schematischen Darstellungen:
Fig. 1 eine Detailansicht einer Hochstromzellanordnung mit einem Zellverbinder;
Fig. 2 eine Detailansicht, ähnlich der Fig. 1, mit einem Beispiel eines Kühlkörperadapters;
Fig. 3 eine perspektivische Ansicht auf eine Hochstromzellanordnung mit mehreren Batteriezellen und einem erfindungsgemäßen Zellverbinderdeckel;
Fig. 4 eine Unteransicht eines erfindungsgemäßen Zellverbinderdeckels;
Fig. 5 eine Detailansicht gemäß Fig. 4 von der Innenseite eines erfindungsgemäßen Zellverbinderdeckels;
Fig. 6 einen Schnitt in perspektivischer Ansicht durch einen erfindungsgemäßen Zellverbinderdeckel mit einem federnden Kühlkörper.

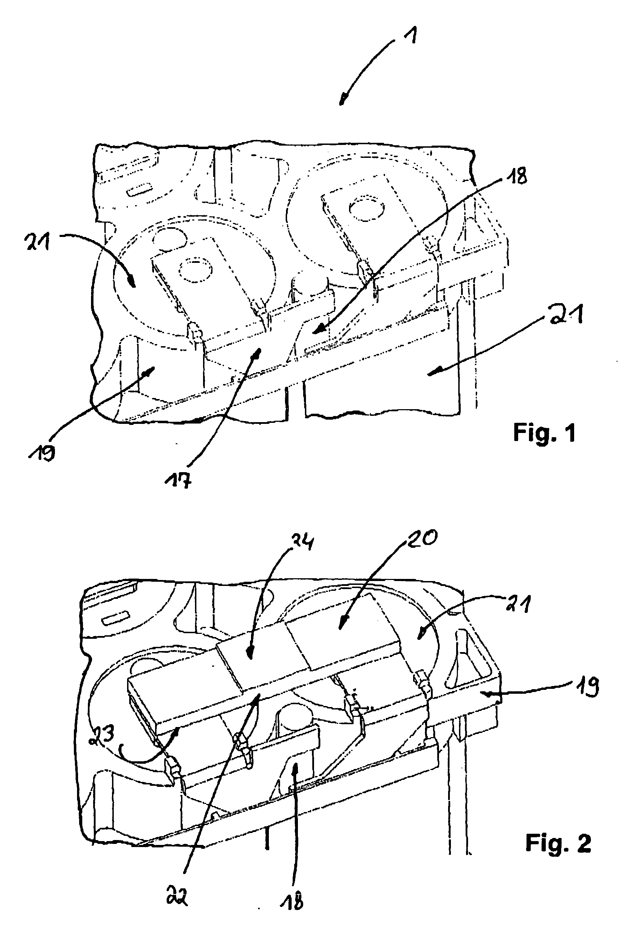

Fig. 1 zeigt eine Detailansicht aus einer Hochstromzellanordnung 1 mit zwei Batteriezellen 21, die im wesenltichen als zylinderförmige Batteriezellen dargstellt sind. Die Batteriezellen 21 werden durch einen Batteriezellhalter 19 aufgenommen. Elektrisch werden jeweils die Plus,- und Minuspole einer Hochstromzellanordnung in Serie geschaltet.

Dies geschieht mittels eines Zellverbinders, vorzugsweise mittels eines flexiblen Zellverbinders 17, wie in Fig. 1 dargestellt. Der flexible Zellverbinder 17 ist dabei jeweils aus unterschiedlichen metallischen Materialien gebildet, die mit je einem Anschluss einer der Batteriezellen 21 verbunden sind und über eine flexible Leitung 18 miteinander elektrisch in Kontakt stehen. Die Positionen an denen die Zellverbinder 17 angeordnet sind, stellen Wärmequellen der Hochstromzellanordnung dar.

Erfindungsgemäß kann, wie in Fig. 2 gezeigt, die Wärme dieser Wärmequellen mittels eines Kühlkörperadapters 20 weggeführt werden zu einer dafür bestimmten Wärmesenke, welche mit Vorteil als ein Gehäuse oder Metallblech ausgebildet sein kann.

Der erfindungsgemäße Kühlkörper 20 ist dabei in seiner einfachsten Bauweise aus einem Steg 22 gebildet, an dessen Unterseite sich Auflageflächen 23 zur Kontaktierung mit den Wärmequellen befinden. An der Oberseite wird mindestes eine Anlagefläche 24 zur Wärmeübertragung angeordnet, welche mit einer entsprechenden Wärmesenke in Kontakt gebracht werden kann. Somit kann auf einfachste Weise, ohne das Anbringen aufwendiger Kühlkörper, die Wärme einer Hochstromzellanordnung von den Wärmequellen zu einer Wärmesenke hin, übertragen werden, da der Kühlkörperadapter 20 aus einem elektrisch nicht leitfähigen Material gebildet ist und insofern die Verbindung zweier benachbarten Batteriezellen 21 nicht zu einem elektrischen Kurzschluss führt. Wesentlich ist nur, dass das verwendete Material des Kühlkörperadapters 20 über gute thermische Leitfähigkeit verfügt. Hierzu gibt es am Markt bereits geeignete, elektrisch nicht teitfähige, jedoch thermisch sehr gut leitfähige Kunststoffmaterialien, die darüber hinaus im Spritz-Guss-Verfahren geformt werden können.

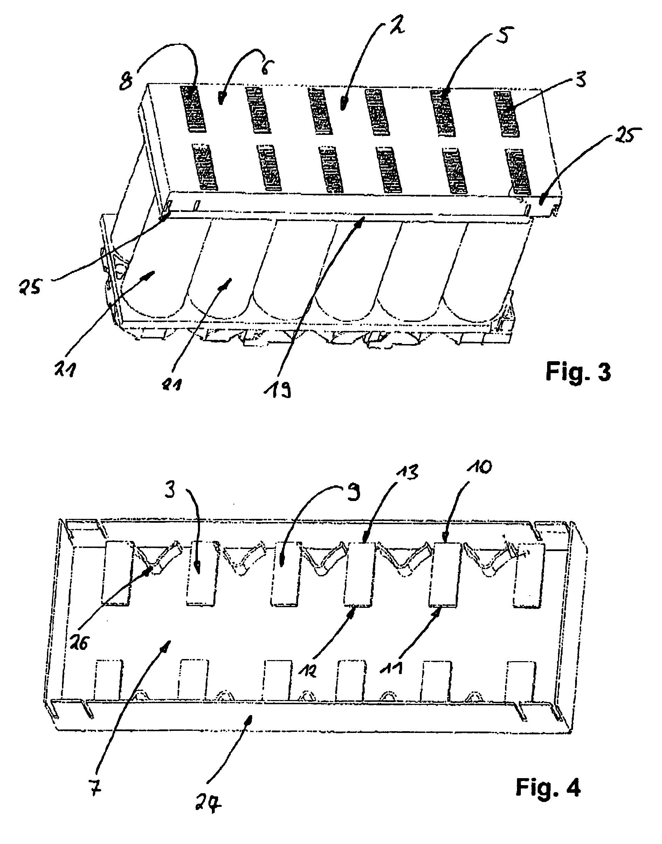

In Fig. 3 ist ein Ausführungsbelspiel eines erfindungsgemäßen Zellverbinderdeckels 2 In perspektivischer Ansicht dargestellt. Der Zellverbinderdeckel 2 sitzt dabei auf paarweise beabstandeten zueinander angeordneten Batteriezellen 21.

An den vier äußeren Ecken des Deckels 2 benachbart befinden sich Rastelemente 25 zur Verbindung des Zellverbinderdeckels 2 mit dem Batteriezellhalter 19.

An der Deckeloberseite 6 sind mehrere Durchbrüche 5 in zwei Reihen dargestellt. In den Durchbrüchen 5 befinden sich federnde Kühlkörper 3, die in den erfindungsgemäßen Zellverbinderdeckel 2 integriert sind.

Der Zellverbinderdeckel 2 ist ebenfalls aus einem thermisch leitfähigen, elektrisch nicht leitfähigem Material gebildet. Alternativ könnte der Deckel allerdings als Metalldeckel ausgebildet sein, bei dem die federnden, elektrisch nicht leitfähigen Kühlkörper 3 in die Durchbrüche 5 mechanisch eingeklippt oder an einer Verbindung 16 verbunden werden.

Wesentlich dabei ist, dass die Kühlkörper 3 als federnde Kühlkörper mit dem Zellverbinderdeckel 2 ausgebildet sind und sich insofern gegenüber dem Zellverbinderdeckel 2 federnd aus ihrer Ruhelage auslenken lassen.

Dies dient der Verbesserung und Optimierung der Wärmeleitfähigkeit, da die Geometrie des Deckels auf die Geometrie der Lage der Batteriezellen so abgestimmt werden muss, dass bei Verbindung des Zellverbinderdeckels 2 mit dem Batteriezellhalter 19 die Kühlkörper 3 federbelastet werden und dadurch eine optimale Anpresskraft der Kühlkörperunterseite 13 mit der Wärmequelle der Hochstromzellanordnung 1 erreicht werden kann.

Die Kühlkörperoberseite B ist dabei bündig mit der Deckeloberseite 6 ausgebildet. Die Kühlkörperunterseite 9 liegt unterhalb der Deckelunterseite 7 so, dass der Kühlkörper 3 damit in das Innere des Zellverbinderdeckels 2 hineinragt.

Die Kühlkörper 3 verfügen über zwei Kühlkörperseiten 12, 13. Wahlweise kann die Federung der Kühlkörper 3 dadurch bewerkstelligt werden, dass eine Seite der Kühlkörperseiten 12, 13 als festes Ende 11 und das gegenüberliegende als freies Ende 10 ausgebildet wird. Dadurch kann das freie Ende des Kühlkörpers 3 bewegt werden, um einen Federweg S.

In einer alternativen Ausführungsform sind die beiden Kühlkörperseiten 12, 13 mit dem Zellverbinderdeckel 2 verbunden und an den Längsseiten getrennt, so dass der Kühlkörper 3 in seinen Mittelabschnitt federnd ausgebildet ist.

Die Federeigenschaften werden dabei durch Kühlrippen 15 verstärkt, die neben der Eigenschaft der Vergrößerung der Oberfläche auch die Eigenschaft bereitstellen, dass sich der Kühlkörper bedingt durch seine Form, biegen kann, In Folge der Verformbarkeit werden dabei auch Federeigenschaften bereitgestellt, wenn der Kühlkörper 3, wie in dem zuletzt genannten Ausführungsbeispiel, an seinen beiden Enden am Zellverbinderdeckel 2 verbunden Ist.

In Fig. 4 ist eine perspektivische Unteransicht eines erfindungsgemäßen Zellverbinderdeckels 2 dargestellt. Erkennbar sind die Kühlkörper 3, welche in den Durchbrüchen 5 so angeordnet sind, dass die Kühlkörperunterseiten 9 unterhalb der Deckelunterseite 7 befinden. Am Deckel angeformt befinden sich Rippen 26 zur Isolation der Batteriezellen 21 und deren flexiblen Zellverbinder 17 untereinander.

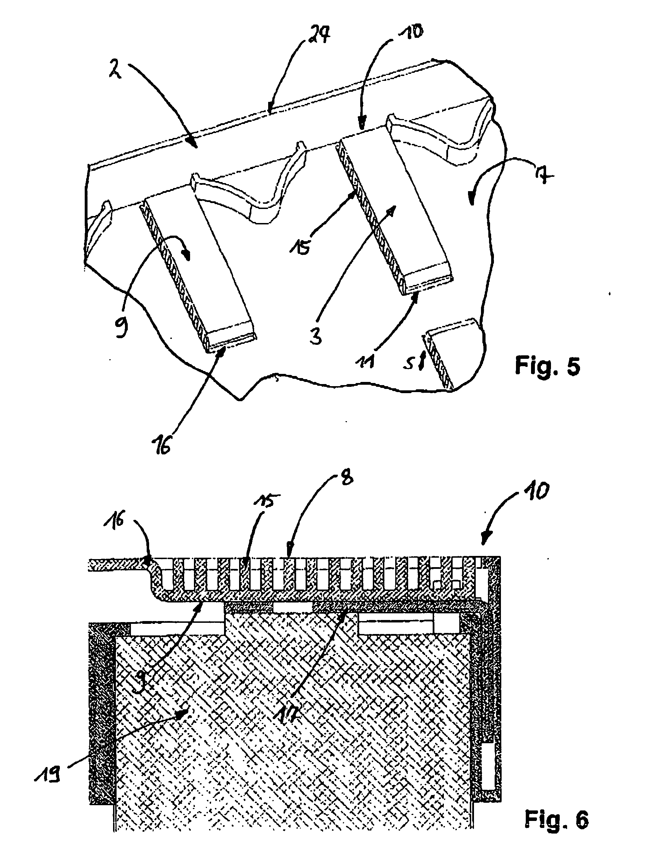

Ein Detail aus Fig. 4 ist in Fig. 5 dargstellt. Deutlich zu erkennen ist die feste Anbindung der Kühlkörper 3 mit ihrem festen Ende 11 an der Verbindung 16. Hierbei ist das feste Ende 11 der Kühlkörper 3 zur Mitte des Zellverbinderdeckels 2 hin angeordnet. Die freien Enden 10 befinden sich benachbart zum Deckelrand 27. Die Kühlkörper 3 können insofern an ihrem freien Ende über einen Federweg S aus ihrer Ruhelage heraus betätigt werden.

Wie in Fig. 6 in einer Schnittansicht dargestellt, kontaktiert die Kühlkörperunterseite 9 mit der Anschlussklemme einer Batteriezelle 21.

Alternativ könnte der Kontakt auch direkt mit einer geeigneten Anlagefläche 24 des Kühlkörperadapters 20 bewerkstelligt werden.

Die Ausbildung der Kühlrippen 15 kann dabei im Bereich der Anlagefläche 24 so ausgebildet sein, dass die Dicke der Kühlrippen 15 zum Zwecke der besseren Federeigenschaften in diesem Bereich dünner ausgebildet ist, als die benachbarten Rippen 15.

Alternativ könnten auch andere Formen und Geometrien der Rippen 15 verwendet werden. Wesentlich ist dabei, dass der Kühlkörper 3 jedenfalls federnd am Zellverblnderdeckel 2 angelenkt wird. Dies kann, wie bereits zuvor beschrieben, auch dadurch bewerkstelligt werden, dass der Kühlkörper 3 nicht formschlüssig mit dem Deckel 2 ausgebildet ist, sondern als getrenntes Bauteil an der Verbindung 16, mit diesem federnd verbunden wird.

Dies kann durch jede geeignete Verbindung bewerkstelligt werden, die den Kühlkörper 3 dazu in die Lage versetzt, mit dem Zellverbinderdeckel 2 beweglich und federnd zu verbinden.

Mit Vorteil kann dann der Kühlkörper 3 aus einem anderen Material hergestellt sein, als der Zellverbinderdeckel 2. Hierdurch kann der Deckel aus einem kostengünstigen Isolationsmaterial geformt werden, währenddessen der Kühlkörper 3 aus einem thermisch hochleitfähigen Kunststoff gebildet ist.

## Patentansprüche

1. Zellverbinderdeckel (2) umfassend eine im wesentlichen flache Deckelplatte (4) mit einer Deckeloberseite (6) und einer Deckelunterseite (7), wobei in der Deckelplatte (4) mehrere Durchbrüche (5) vorgesehen sind, **dadurch gekennzeichnet, dass** in den Durchbrüchen (5) federnde Kühlkörper (3) angeordnet sind.

2. Zellverbinderdeckel (2) nach Anspruch 1, **dadurch gekennzeichnet, dass** der Zellverbinderdeckel (2) ein Kunststoffdeckel ist und die Kühlkörper (3) aus einem elektrisch isolierenden Material gebildet sind,

3. Zellverbinderdeckel (2) gemäß Anspruch 1 oder 2, **dadurch gekennzeichnet, dass** die federnden Kühlkörper (3) in den Durchbrüchen (5) mit ihrer Kühlkörperoberseite (8) bündig mit der Deckeloberseite (6) angeordnet sind.

4. Zellverbinderdeckel (2) gemäß einem der vorhergehenden Ansprüche, **dadurch gekennzeichnet, dass** die federnden Kühlkörper mit ihrer im wesentlichen flachen Kühlkörperunterselte (9) unterhalb der Deckelunterseite (7) in den Durchbrüchen (5) angeordnet sind.

5. Zellverbinderdeckel (2) gemäß einem der vorhergehenden Ansprüche, **dadurch gekennzeichnet, dass** die federnden Kühlkörper (3) über zwei Kühlkörperseiten (12a,12b) verfügen, welche beide mit dem Zellverbinderdeckel (2) an diesen Seiten so verbunden sind, dass die Kühlkörper (3) in ihrem Mittelabschnitt (14) federnd gegenüber dem Deckel ausgebildet sind, derart, dass der Mittelabschnitt (14) um einen definierten Federweg S aus seiner nicht ausgefederten Position ausgelenkt werden kann.

6. Zellverbinderdeckel (2) gemäß Anspruch 5, **dadurch gekennzeichnet, dass** eine der Kühlkörperseiten (12a, 12b) nicht mit dem Deckel (2) verbunden ist, sondern als freies, bewegliches Ende (10) ausgebildet ist, während die andere Kühlkörperseite (12a, 12b) als festes Ende (11) am Deckel angelenkt ist, so dass der Kühlkörper (3) mit seinem freien Ende beweglich gegenüber dem Deckel ausgelenkt werden kann.

7. Zellverbinderdeckel (2) gemäß einem der vorhergehenden Ansprüche, **dadurch gekennzeichnet, dass** die Kühlkörper (3) getrennt vom Deckel (2) ausgebildet sind und mittels einer lösbaren Verbindung (16) mit dem Deckel (2) an wenigstens einem der Kühlkörperseiten (12a, 12b) verbunden sind.

8. Zellverbinderdeckel (2) gemäß einem der vorhergehenden Ansprüche, **dadurch gekennzeichnet, dass** die Kühlkörper (3) aus einem vom Zellverbinderdeckel (2) unterschiedlichen Material ausgebildet sind.

9. Hochstromzellanordnung (1) umfassend mehrere Batteriezellen (21), welche in einem Batteriezellhalter (19) angeordnet sind, wobei die Batteriezellen (21) mit Zellverbinder (17), jeweils paarweise miteinander verbunden sind, umfassend einen Zellverbinderdeckel (2) zum Verrasten mit dem Batteriehalter (19), **dadurch gekennzeichnet, dass** der Zellverbinderdeckel (2) ein Zellverbinderdeckel gemäß einem der Ansprüche 1 bis 8 darstellt.

10. Hochstromzellanordnung (1) gemäß Anspruch 9, **dadurch gekennzeichnet, dass** zwischen dem Zellverbinderdeckei (2) und den Batteriezellen (21) ein Kühlkörperadapter (20), gemäß einem der Ansprüche 9 oder 10, angeordnet ist.

11. Hochstromzellanordnung (1) gemäß Anspruch 10, **dadurch gekennzeichnet, dass** die Kühlkörperadapter (20) mit ihren Anlageflächen (24) in berührendem Kontakt mit den Kühlkörperunterseiten (9) der Kühlkörper (8) sind.

12. Hochstromzellanordnung (1) gemäß einem der Ansprüche 10 bis 11, **dadurch gekennzeichnet, dass** durch den Kontakt sich die Kühlkörper (8) permanent in einer federbelastet ausgelenkten Position befinden.

## Claims

1. Cell connector cover (2) comprising a substantially planar cover plate (4) having a cover upper side (6) and a cover lower side (7), with a plurality of apertures (5) being provided in the cover plate (4), **characterized in that** spring-loaded heat sinks (3) are arranged in the apertures (5).

2. Cell connector cover (2) according to Claim 1, **characterized in that** the cell connector cover (2) is a plastic cover and the heat sinks (3) are formed from an electrically insulating material.

3. Cell connector cover (2) according to Claim 1 or 2, **characterized in that** the spring-loaded heat sinks (3) are arranged in the apertures (5) with their heat sink upper side (8) flush with the cover upper side (6).

4. Cell connector cover (2) according to one of the preceding claims, **characterized in that** the spring-loaded heat sinks are arranged in the apertures (5) with their substantially planar heat sink lower side (9) below the cover lower side (7).

5. Cell connector cover (2) according to one of the preceding claims, **characterized in that** the spring-loaded heat sinks (3) have two heat sink sides (12a, 12b) which are both connected to the cell connector cover (2) on these sides such that the heat sinks (3) are designed to be spring-loaded with respect to the cover in their central section (14) in such a way that the central section (14) can be deflected out of its non-extended position by a defined spring distance S.

6. Cell connector cover (2) according to Claim 5, **characterized in that** one of the heat sink sides (12a, 12b) is not connected to the cover (2) but is in the form of a free, moving end (10), while the other heat sink side (12a, 12b) is connected to the cover in an articulated manner as a fixed end (11), with the result that the heat sink (3) can be deflected out in a moving manner with respect to the cover by way of its free end.

7. Cell connector cover (2) according to one of the preceding claims, **characterized in that** the heat sinks (3) are separate from the cover (2) and are connected to the cover (2) on at least one of the heat sink sides (12a, 12b) by means of a releasable connection (16).

8. Cell connector cover (2) according to one of the preceding claims, **characterized in that** the heat sinks (3) are formed from a material which differs from the cell connector cover (2).

9. High-current cell arrangement (1) comprising a plurality of battery cells (21) which are arranged in a battery cell holder (19), with the battery cells (21) being connected to one another, in each case in pairs, by way of cell connectors (17), comprising a cell connector cover (2) for latching to the battery holder (19), **characterized in that** the cell connector cover (2) is a cell connector cover according to one of Claims 1 to 8.

10. High-current cell arrangement (1) according to Claim 9, **characterized in that** a heat sink adapter (20) according to one of Claims 9 and 10 is arranged between the cell connector cover (2) and the battery cells (21).

11. High-current cell arrangement (1) according to Claim 10, **characterized in that** the heat sink adapters (20) are in physical contact with the lower sides (9) of the heat sinks (8) by way of their abutment surfaces (24).

12. High-current cell arrangement (1) according to either of Claims 10 and 11, **characterized in that** the heat sinks (8) are permanently in a position in which they are deflected out in a spring-loaded manner on account of the contact.

## Revendications

1. Cache de connecteur de cellule (2) comprenant une plaque de cache (4) pour l'essentiel plate dotée d'un côté supérieur de cache (6) et d'un côté inférieur de cache (7), plusieurs percées (5) étant prévues dans la plaque de cache (4), **caractérisé en ce que** des corps de refroidissement (3) à ressort sont disposés dans les percées (5).

2. Cache de connecteur de cellule (2) selon la revendication 1, **caractérisé en ce que** le cache de connecteur de cellule (2) est un cache en plastique et que les corps de refroidissement (3) sont formés à partir d'un matériau électriquement isolant.

3. Cache de connecteur de cellule (2) selon la revendication 1 ou 2, **caractérisé en ce que** les corps de refroidissement (3) à ressort sont disposés dans les percées (5) avec leur côté supérieur de corps de refroidissement (8) en affleurement avec le côté supérieur de cache (6).

4. Cache de connecteur de cellule (2) selon l'une quelconque des revendications précédentes, **caractérisé en ce que** les corps de refroidissement à ressort sont disposés avec leur côté inférieur de corps de refroidissement (9) pour l'essentiel plat en dessous du côté inférieur de cache (7) dans les percées (5).

5. Cache de connecteur de cellule (2) selon l'une quelconque des revendications précédentes, **caractérisé en ce que** les corps de refroidissement à ressort (3) disposent de deux côtés de corps de refroidissement (12a, 12b) reliés tous deux de telle sorte au cache de connecteur de cellule (2) au niveau de ces côtés que les corps de refroidissement (3) sont réalisés dans leur section médiane (14) à la façon de ressorts par rapport au cache, de telle sorte que la section médiane (14) peut être déviée hors de sa position non sollicitée sur une course de ressort S définie.

6. Cache de connecteur de cellule (2) selon la revendication 5, **caractérisé en ce qu'**un des côtés du corps de refroidissement (12a, 12b) n'est pas relié au cache (2) mais prend la forme d'une extrémité (10) mobile libre, tandis que l'autre côté de corps de refroidissement (12a, 12b) est articulé au cache sous la forme d'une extrémité (11) fixe, de sorte que le corps de refroidissement (3) peut être dévié avec son extrémité libre de façon mobile par rapport au cache.

7. Cache de connecteur de cellule (2) selon l'une quelconque des revendications précédentes, **caractérisé en ce que** les corps de refroidissement (3) sont réalisés de façon séparée par rapport au cache (2) et sont reliés au cache (2) au niveau d'au moins un des côtés de corps de refroidissement (12a, 12b) par le biais d'une liaison amovible (16).

8. Cache de connecteur de cellule (2) selon l'une quelconque des revendications précédentes, **caractérisé en ce que** les corps de refroidissement (3) sont fabriqués à partir d'un matériau différent de celui du cache de connecteur de cellule (2).

9. Agencement de cellules à haute tension (1) comprenant plusieurs cellules de batterie (21) disposées dans un support de cellules de batterie (19), les cellules de batterie (21) étant respectivement reliées entre elles par paire avec les connecteurs de cellule (17), comprenant un cache de connecteur de cellule (2) à encliqueter avec le support de batterie (19), **caractérisé en ce que** le cache de connecteur de cellule (2) représente un cache de connecteur de cellule selon l'une quelconque des revendications 1 à 8.

10. Agencement de cellules à haute tension (1) selon la revendication 9, **caractérisé en ce qu'**un adaptateur de corps de refroidissement (20), selon l'une quelconque des revendications 9 ou 10, est disposé entre le cache de connecteur de cellule (2) et les cellules de batterie (21).

11. Agencement de cellules à haute tension (1) selon la revendication 10, **caractérisé en ce que** les adaptateurs de corps de refroidissement (20) sont en contact tactile, avec leurs surfaces d'appui (24), avec les côtés inférieurs de corps de refroidissement (9) des corps de refroidissement (8).

12. Agencement de cellules à haute tension (1) selon l'une quelconque des revendications 10 à 11, **caractérisé en ce que** les corps de refroidissement (8) se trouvent en permanence dans une position déviée chargée par ressort du fait du contact établi.
